# EUROPEAN PATENT SPECIFICATION

(11) **EP 2 635 024 B1**
(45) Date of publication and mention of the grant of the patent: **07.09.2016**
(21) Application number: 12157296.0
(22) Date of filing: 28.02.2012
(51) Int. Cl.: H04N 5/64

(54) **System for mounting appliances behind a flat panel display**
System zur Montage von Geräten hinter einem Flachbildschirm
Système d'assemblage d'appareils derrière un écran plat

(43) Date of publication of application: 04.09.2013
(73) Proprietor: AVCI, 2003 RM Haarlem (NL)
(72) Inventor: Stokman, Herbert, 2003 RM Haarlem (NL)
(74) Representative: Renkema, Jaap

(56) References cited:
- EP-A1- 2 424 235
- US-A1- 2011 063 440

## Description

### TECHNICAL FIELD

The present invention relates to a system for mounting appliances behind a flat panel display such as a computer screen or television.

### BACKGROUND ART

Flat panel displays are common for entertainment or computer applications and, as a consequence, an internationally recognized standard has been implemented to provide guidelines for attaching the flat panel displays to a wall. It is also known to mount appliances behind these flat panel displays. The VESA-FDMI

### (Video Electronics Standards Association - Flat panel display Mounting Interface)

Standard lists a range of square/rectangular screw hole patterns. Rectangular screw hole patterns have a larger distance in the direction parallel to the top and bottom side of the display (hereinafter referred as the horizontal direction) than the direction perpendicular to the horizontal direction (hereinafter referred as the vertical direction).

Several mounting devices are known for accommodating appliances used together with the display, such as set-top boxes (digital players) and computers.

WO2009/056814A1 discloses a housing for mounting behind a flat panel display with a retractable and/or extendable means to extend to be accessible by a user when the flat panel display is mounted. The housing is intended to enclose one or more electronic devices. The retractable and/or extendable means is a tray that extends for use and retracts for storage into the device.

JP2007-293913 discloses an LCD display and a simplified computer mounted on the back of the display with a mounting element having a side to be screwed via VESA standard holes, an opposite side for holding the simplified computer and a bottom side for supporting the simplified computer.

JP2004-258934 discloses a tray positioned on top of a flat panel display monitor provided with a VESA mount, the tray being attached to the VESA mount and being supported by a support element the length of which is adjustable.

GB2467735 discloses a storage system for mounting on the rear of a flat panel display comprising fixing brackets attached to the display and main frame hung from the fixing brackets. Housings for various consoles are mounted on the main frame.

Known mounting devices suffer from the drawbacks that they are complex and/or accommodate only specific appliances.

### DISCLOSURE OF THE INVENTION

An object of the present invention is to provide a simple system for mounting an appliance behind a flat panel display, which does not suffer from the above and/or other drawbacks.

According to the present invention, a system is provided for mounting an appliance behind a flat panel display having VESA-FDMI, Video Electronics Standards Association - Flat panel display Mounting Interface, holes, comprising:
- a mount board provided with a first connection element with which the mount board is connectable to the display via the VESA-FDMI holes;
- a support element connectable to the mount board and comprising a support portion having open ends for supporting the appliance thereon; and characterized in that the system further comprises
- an adjustable fastening element connectable to the mount board for fastening the appliance against the mount board,
- wherein the mount board has one side provided with a display facing groove facing the display during use and an appliance facing groove facing the opposite way and the display facing groove and the appliance facing groove have corresponding shapes which allow to connect the mount board to a further mount board by sliding the display facing groove or the appliance facing groove of the mount board into the corresponding appliance facing groove or the display facing groove of the further mount board.

The present invention utilizes the VESA- FDMI holes for the attachment of a mount board to the back of a flat panel display. The system according to the present invention provides a simple solution for storing appliances often used together with a display, such as DVD players, computers, game consoles, set top box decoders etc.

An advantage of the present invention is that a wide range of appliances may be mounted on the back of a flat panel display. The fact that the appliance rests on an open ended support allows various types of appliances to be stored behind the display irrespective of the dimensions, especially thickness, of the appliances. The mounted appliance is held by the adjustable fastening element preventing the appliance resting on the support portion of the support element to slide or slip off therefrom.

The size of the system of the present invention to be mounted behind the flat panel display can be advantageously adjusted by connecting together a desired number of the mount boards. This allows that the system may be used for various types of displays and appliances.

The mount boards may be connectable at their sides (side by side) and/or at the top and bottom (top to tail). Preferably, the mount boards are connectable at least side by side.

As used herein, the mount board of the same type is understood to mean the mount board according to the present invention.

Preferably, the system comprises at least two of the mount boards according to the present invention.

The mount board has one side provided with a display facing groove facing the display during use and an appliance facing groove facing the opposite way and the display facing groove and the appliance facing groove have corresponding shapes which allow sliding into each other. In this embodiment, the display facing groove of one mount board slides into the appliance facing groove of the mount board next to it and the connection is made between the two mount boards.

As used herein, during use is meant during the time that the mount board is connected behind the flat panel display.

Preferably, the display facing groove and/or the appliance facing groove are provided with a locking means for fixing to each other. An example of the locking means is a finger which clicks into a slot in the corresponding groove.

Preferably, the mount board is provided with a horizontally extending groove having at least one open end and the support element is insertable into the horizontally extending groove through the open end to be retained therein.

Preferably, the adjustable fastening element comprises at least two positioning elements connectable to the mount board and a band connectable to the at least two positioning elements. The mount board is arranged such that the positioning elements are connectable to the mount board at different positions so that the distance between the two neighboring positioning elements may be varied. The positioning elements are to be connected to the mount board so that the appliance is located between two neighboring positioning elements. The band is connectable to the positioning elements such that the band holds the appliance in place between the positioning elements. During use, the positioning elements are preferably positioned on the mount board so that the two neighboring positioning elements are close to the appliance located between the positioning elements. The band connected to the positioning elements can then firmly hold the appliance.

Preferably, the mount board is provided with a first horizontally extending groove having at least one open end and at least two of the positioning elements are insertable into the first horizontally extending groove through the open end to be retained therein. For mounting the appliance, the positioning elements are inserted in the same groove such that the appliance is positioned between two horizontally neighboring positioning elements. The appliance rests on the support element connected to the mount board at a lower vertical position than the positioning elements. This embodiment has an advantage that the positions of the positioning elements and hence the distance between the positioning elements can be chosen so that the appliance is retained with a suitable strength.

Preferably, the mount board is further provided with a second horizontally extending groove having at least one open end and the positioning elements and/or the support element are insertable into the second horizontally extending groove through the open end to be retained therein, wherein the second horizontally extending groove is positioned at a lower vertical position than the first horizontally extending groove. The second groove preferably has the same shape as the first groove.

The embodiment in which the positioning elements are insertable into the first and the second horizontally extending grooves allows various ways of holding the appliance, for example: two positioning elements are inserted in the first groove; two positioning elements are inserted in the second groove; or one positioning element is inserted in the first groove and one positioning element is inserted in the second groove. When two positioning elements are inserted in the first groove, the appliance is held by the band at a higher vertical position. When two positioning elements are inserted in the second groove, the appliance is held by the band at a lower vertical position. In these cases where the two positioning elements are inserted in the same groove, the distance between the positioning elements can be chosen so that the appliance is retained with a suitable strength. When two positioning elements are inserted in different grooves, the appliance is held by the band extending in a vertical or a diagonal direction. This is advantageous when the appliance requires access from the side. For example, Play Station ® or Xbox ® has a disc tray which moves out of the game console. Since the disc tray moves horizontally (sideways), it is preferable that the band holds the console by a band running vertically so that the movement of the tray is not blocked by the band.

It is also possible to use more than two positioning elements and more than one band. For example, two positioning elements are inserted in the first groove and two positioning elements are inserted in the second groove and all positioning elements are connected to each other by bands extending horizontally, vertically or diagonally.

Preferably, the mount board is further provided with a third horizontally extending groove having at least one open end and the positioning elements and/or the support element are insertable into the third horizontally extending groove through the open end to be retained therein, wherein the third horizontally extending groove is positioned at a lower vertical position than the second horizontally extending groove. The third groove preferably has the same shape as the first and/or the second groove. A greater flexibility of the positions of the positioning elements is achieved.

The mount board may be provided with further grooves at lower vertical positions than the third groove for accommodating the positioning elements.

Preferably, the support element is insertable into the second, third or further horizontally extending groove through the open end to be retained therein. In this case, no additional means are required for connection of the support element to the mount board.

In a particularly preferred embodiment, the mount board is provided with two or three vertically neighboring, horizontally extending grooves each having at least one open end, wherein the positioning elements and/or the support element are insertable into the grooves through the open end to be retained therein.

The positioning elements and/or the support element may be fixed at the desired locations of the horizontally extending groove. The horizontally extending groove and the positioning elements and the support element may be shaped and dimensioned such that the positioning elements and the support element are held in the groove tight enough so that they move only when an appropriate amount of force typically applicable by hands is applied.

The horizontally extending groove may be provided with teeth and the positioning elements and/or the support element may be provided with a protrusion which cooperates with the teeth to fix the elements in defined positions.

Various embodiments are possible for the positioning elements and the band. The band may be elastic or non-elastic.

The positioning element may comprise a portion defining a slot into which the band may be inserted. The band may be inserted into the slots of two positioning elements connected at their respective positions on the mount board. After an appliance is placed on the support portion, the ends of the band are connected to each other to form a loop which runs around the appliance. The loop holds the appliance in place and prevents it from falling over in the direction away from the mount board. The open ends of the band may be provided with hook-and-loop fasteners (e.g. Velcro ®, a button and several holes, a buckle and the like.

The size of the loop may be adjustable to fit the size, especially thickness of the appliance. This allows adjustment of the tightness of the fastening element.

The slots of the two positioning elements preferably face each other when two positioning elements are connected to the mount board. For example, a positioning element which has a slot facing in the horizontal direction are preferably placed at the same vertical position as another positioning element having the same shape. Two of these positioning elements can hold the appliance by a band running in the horizontal direction. Accordingly, in a preferred embodiment, the positioning elements comprise slots which face each other when inserted in the same groove. Similarly, a positioning element which has a slot facing in the vertical direction are preferably placed at the same horizontal position as another positioning element having the same shape. Two of these positioning elements can hold the appliance by a band running in the vertical direction. Accordingly, in a preferred embodiment, the positioning elements comprise slots which face each other when inserted in different grooves.

Instead of holding the appliance by the loop formed around the appliance, the appliance may be held between the band and the mount board. The band comprises ends connectable to the positioning elements. The ends may be constructed in various ways so that they may be connected to the slots. The length of the band may be adjustable to fit the size, especially thickness of the appliance. The band may be formed of two pieces, each of the pieces having one end connectable to the positioning element and one end connectable to each other.

The system may comprise one support element or more than one support element. Preferably, the system comprises more than one support element.

The support element may be provided with a hole. A band may be inserted in the hole to form a loop, which loop may be used for organizing cables of the display and/or the appliance mounted on the system.

The appliance facing groove provided at the side of the mount board may intersect with the open ends of the horizontally extending grooves. The open ends of the horizontally extending grooves may be closable by the neighbouring mount board. The closed ends ensure that the positioning elements and the support elements inserted in the grooves do not fall out of the grooves.

In some embodiments of the present invention, the system further comprises a bar slidable into the appliance facing groove to fill the appliance facing groove. The bar may close the open ends of the horizontally extending grooves.

The mount board may be provided with further connection means for the support element and the positioning elements.

The first connection element of the mount board may comprise at least one slot having a horizontally elongated shape with its length equal to the distance between two horizontally neighboring VESA-FDMI holes. The mount board can be mounted to the flat panel display by screws or other suitable fastening means through the slot to two VESA-FDMI holes. Preferably, the first connection element of the mount board comprises at least one slot having a horizontally elongated shape with its length larger than the distance between two horizontally neighboring VESA-FDMI holes. The shape and the size of the slot in such embodiments allow adjustment of the horizontal position of the mount board with respect to the flat panel display. For example, this embodiment includes a system for a flat panel display having a 75 mm x 75 mm hole pattern, which has at least one horizontally elongated slot having a length more than 75 mm. Similarly, this embodiment includes a system for a flat panel display having a 400 mm x 400 mm hole pattern, which has at least one horizontally elongated slot having a length more than 400 mm. In the same way, the system according to this invention covers each of the systems for flat panel displays with all possible VESA-FDMI hole patterns, wherein the system comprises a mount board having a horizontally elongated slot with a suitable length.

In the case of the system for a flat panel display with a distance between horizontally neighboring VESA-FDMI holes of 200 mm or less, the length of the slot is preferably at least 2 cm larger than the distance between the horizontally neighboring VESA-FDMI holes. More preferably, the length of the slot is at least 5 cm or at least 10 cm larger than the distance between the horizontally neighboring VESA-FDMI holes. In the case of the system for a flat panel display with a distance between horizontally neighboring VESA-FDMI holes of more than 200 mm, the length of the slot is preferably at least 5 cm, more preferably at least 10 cm, 20 cm or 40 cm larger than the distance between the two horizontally neighboring VESA-FDMI holes.

In the cases where the system comprises two mount boards, the mount board may have a slot having a horizontally elongated shape with its length smaller than the distance between two horizontally neighboring VESA-FDMI holes. In this case, one mount board is connectable to the display via one of the two horizontally neighboring VESA-FDMI holes and the neighboring mount board is connectable to the display via the other one of the two horizontally neighboring VESA-FDMI holes.

The first connection element of the mount board may also comprise at least one slot having a vertically elongated shape with its length equal to the distance between two vertically neighboring VESA-FDMI holes. Preferably, the first connection element of the mount board comprises at least one slot having a vertically elongated shape with its length larger than the distance between two vertically neighboring VESA-FDMI holes. This allows adjustment of the vertical position of the mount board with respect to the display having a suitable VESA-FDMI holes dimension. In the same way as the previously described embodiment, the system according to this invention covers each of the systems for flat panel displays with all possible VESA-FDMI hole patterns, wherein the system comprises a mount board having a vertically elongated slot with a suitable length. In the case of the system for a flat panel display with a distance between vertically neighboring VESA-FDMI holes of 200 mm or less, the length of the slot is preferably at least 2 cm larger than the distance between the vertically neighboring VESA-FDMI holes. More preferably, the length of the slot is at least 5 cm or at least 10 cm larger than the distance between the vertically neighboring VESA-FDMI holes. In the case of the system for a flat panel display with a distance between horizontally neighboring VESA-FDMI holes of more than 200 mm, the length of the slot is preferably at least 5 cm, more preferably at least 10 cm, 20 cm or 40 cm larger than the distance between the two vertically neighboring VESA-FDMI holes.

Preferably, the first connection element of the mount board comprises at least two vertically neighboring slots each having a horizontally elongated shape with its length larger than the distance between two horizontally neighboring VESA-FDMI holes. This is extremely advantageous in that the position of the mount board with respect to the display may be vertically shifted by choosing which slot to be used for fixing the mount board to the display. It is possible to connect the upper slot to the upper VESA-FDMI holes or to the lower VESA-FDMI holes. Alternatively, the lower slot may be connected to the upper VESA-FDMI holes or to the lower VESA-FDMI holes. This allows positioning the mount board on the back of the display where the mount board does not cover relevant functions of the flat panel display, such as connectors for related appliances. Preferably, the distance between the vertically neighboring slots matches the distance between two vertically neighboring VESA-FDMI holes. In this case, it is possible to connect the upper slot to the upper VESA-FDMI holes and the lower slot to the lower VESA-FDMI holes. Use of the two slots of the mount board fixes the mount board more securely to the flat panel display. It is also possible that the first connection element of the mount board comprises at least two horizontally neighboring slots each having a vertically elongated shape with its length larger than the distance between two vertically neighboring VESA-FDMI holes. Preferably, the distance between the horizontally neighboring slots matching the distance between two horizontally neighboring VESA-FDMI holes.

Preferably, the first connection element of the mount board comprises at least three vertically neighboring slots each having a horizontally elongated shape with its length larger than the distance between two horizontally neighboring VESA-FDMI holes. Preferably, each of the distances between the vertically neighboring slots matches the distance between two vertically neighboring VESA-FDMI holes. This is extremely advantageous in that the position of the mount board with respect to the display may be vertically shifted considerably by choosing which two slots to be used for fixing the mount board to the display, while securely fixing the mount board to the display by the use of two slots. It is also possible that the first connection element of the mount board comprises at least three horizontally neighboring slots each having a vertically elongated shape with its length larger than the distance between two vertically neighboring VESA-FDMI holes. Preferably, each of the distances between the horizontally neighboring slots matches the distance between two horizontally neighboring VESA-FDMI holes. In this case, the mount board may be horizontally shifted considerably with respect to the display.

In one embodiment, the first connection element comprises a plurality of, preferably at least 4, holes arranged in a pattern matching the VESA-FDMI holes pattern. More preferably, the first connection element comprises at least 8 holes arranged in a pattern matching two VESA-FDMI holes patterns. Even more preferably, the first connection element comprises at least 12 holes arranged in a pattern matching three VESA-FDMI holes patterns.

The mount board may further comprise an opening. This is advantageous in that a light mount board is achieved and the opening provides possibility for preventing relevant functions of the flat panel display to be covered, such as connection holes to related appliance. Preferably, the opening is at least 4 cm², more preferably at least 10 cm².

The mount board is preferably smaller than the flat panel display on which it is mounted.

The mount board may either be rigid or flexible. The mount board may also be partly rigid and partly flexible. Preferably, the mount board is rigid in view of obtaining a higher strength.

Preferably, the system further comprises an infrared receiver which is connectable to the appliance to be mounted on the mount board for operating the appliance. The infrared receiver receives signals from e.g. a remote controller for operating the appliance and transfers it to the appliance mounted on the mount board. The infrared receiver is connected to the appliance is preferably placed in a location reachable by the infrared.

According to a further aspect of the invention, a mount board as described above is provided.

In some embodiments, the mount board according to the present invention is made by moulding.

In some embodiments, the mount board according to the present invention is made from one piece of a plate-shaped material. This is advantageous in easy manufacturing and strength of the mount board. Accordingly, a process for making the mount board according to the present invention is provided, wherein the mount board is made by bending one piece of a plate-shaped material. It will be appreciated that the plate-shaped material may be of metal or polymer or the like. Metals such as steel and aluminum are preferred for their strength. It will also be appreciated that the mount board may be square, rectangular or any other polygonal shape, or circular, oval or any other suitable shape.

According to a further aspect of the invention, a support element as described above is provided.

In some embodiments, the support element according to the present invention is made by moulding.

In some embodiments, each of the support element is made from one piece of a plate-shaped material. This is advantageous in easy manufacturing and strength of the support element. Accordingly, a process for making the support element according to the present invention is provided, wherein the support element is made from one plate.

According to a further aspect of the invention, an adjustable fastening element as described above is provided

It is noted that the invention relates to all possible combination of features recited in the claims. It is specifically mentioned that especially the combinations of the features relating to the first connection element, the features relating to the support element, and the features relating to the fastening element are part of the invention.

### BRIEF DESCRIPTION OF THE DRAWINGS

These and other aspects of the invention will be apparent from and elucidated with reference to the schematic drawings in which:
Figure 1(a) schematically shows an embodiment of the mount board according to the present invention seen from the appliance facing side;
Figure 1(b) schematically shows an embodiment of the mount board according to the present invention seen from the display facing side;
Figure 2 schematically shows an embodiment of the two mount boards according to the present invention connected together;
Figure 3 schematically shows a perspective view of one embodiment of the support element according to the present invention;
Figure 4(a) schematically shows a perspective view of one embodiment of the adjustable fastening element according to the present invention;
Figure 4(b) schematically shows a perspective view of another embodiment of the adjustable fastening element according to the present invention;
Figure 5(a) schematically shows an embodiment of the system according to the present invention seen from the appliance facing side and
Figure 5(b) schematically shows a further embodiment of the system according to the present invention seen from the appliance facing side.

### DETAILED DESCRIPTION OF EMBODIMENTS

It is noted that the same reference numbers have been used for corresponding elements in the embodiments wherever possible.

In the description, terms 'higher' and 'lower' vertical positions (and terms above and below) are used to indicate vertical positions in or of the mount board when the board is attached to the display, where the higher vertical position refers to a position closer to the top of the display than the lower vertical position.

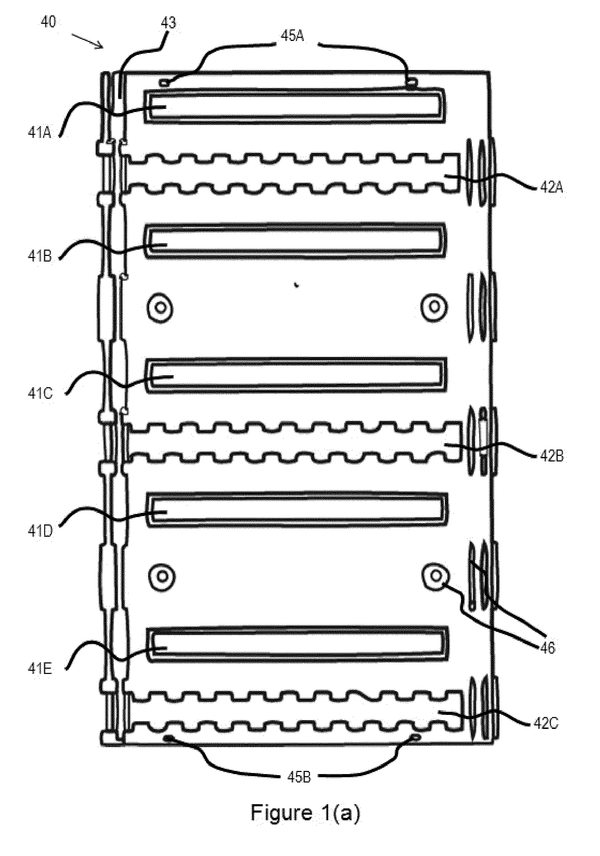

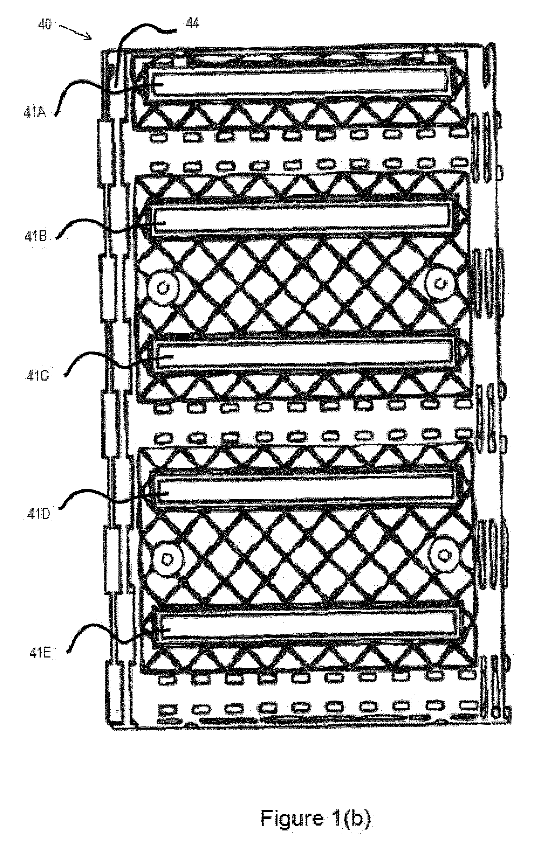

Figures 1(a) and (b) show an embodiment of the mount board according to the present invention. The mount board 40 is a generally rectangular plate having a face for facing the display and a face for facing the appliance.

Figure 1(a) shows the mount board seen from the appliance facing side. Figure 1(b) shows the same mount board seen from the display facing side.

The mount board 40 comprises a first connection element in the form of slots 41A-41 E, three horizontally extending grooves 42A-42C and an appliance facing groove 43, visible in figure 1(a). A display facing groove 44 is visible in figure 1(b).

The mount board 40 has five slots 41 A-41 E elongated in the horizontal direction of the display. The slots 41A-41 E are vertically positioned such that the distance between the neighboring slots matches the VESA-FDMI holes pattern. The mount board 40 may be attached to a flat panel display by means of screws penetrating through the slots into the VESA-FDMI holes in the back of the display. The mount board 40 may be positioned at a desired location on the back of the display by using desired slots and choosing desired horizontal positions in the slots. Due to the flexibility in the positioning of the mount board 40, the mount board 40 can be mounted to the back of a flat panel display having various types of configurations.

The mount board 40 has one side provided with a display facing groove 44 (visible in Figure 1(b)) which faces the display and another side provided with an appliance facing groove 43 (visible in Figure 1(a)) facing the opposite way.

The mount board 40 in this embodiment has three horizontally extending grooves 42A, 42B, 42C. The three horizontally extending grooves 42A, 42B, 42C are vertically neighboring to each other. Each of the grooves 42A, 42B, 42C has an open end merging into the appliance facing groove 43. Each of the grooves 42A, 42B, 42C has teeth for holding elements therein.

The mount board 40 comprises holes 45A above the first connection element 41 A and holes 45B below the horizontally extending groove 42C. These holes may be used to connect the mount board 40 to other mount boards at its top and the bottom.

The mount board 40 comprises holes 46 at various locations. These holes may improve the ease of the manufacture of the mount boards.

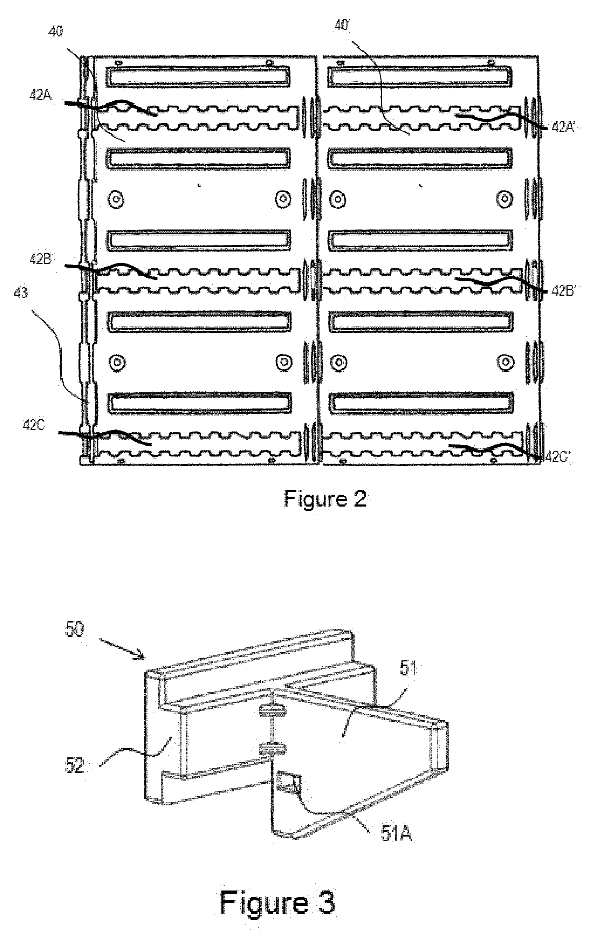

Referring to Figure 2, two mount boards 40, 40' according to the invention are shown connected to each other by the display facing groove 44 of the mount board 40 and the appliance facing groove 43' of the mount board 40'. The display facing groove 44 of the mount board 40 and the appliance facing groove 43' of the mount board 40' have corresponding cross sections and are slidable into each other so that the mount boards 10 and 10' can be connected to each other side by side.

In figure 2, the open ends of the grooves 42A',42B',42C' of the mount board 40' are closed by the neighboring mount board 40. In this figure, the open ends of the grooves 42A,42B,42C of the mount board 40 are open. A bar having a shape corresponding to the shape of the appliance facing groove 43 may be slid into the appliance facing groove 43. In this case, the open ends of the grooves 42A,42B,42C are closed by the bar to ensure that the support element 50 and the positioning element 60 are retained in the grooves 42A,42B,42C.

Figure 3 shows a perspective view of one embodiment of the support element 50 according to the present invention. The support element 50 comprises a support portion 51 and a portion 52 insertable into the groove 42A,42B,42C through its open end to be retained therein. The portion 52 insertable into the groove has a shape and a dimension to fit the groove 42A,42B,42C to be retained by and in the grooves 42A, 42B, 42C. The support portion 51 has an open end for supporting an appliance thereon. In this embodiment, the support portion 51 is provided with a hole 51 A. A band may be inserted therein to form a loop, which loop may be used for organizing cables of the display and/or the appliance mounted on the system.

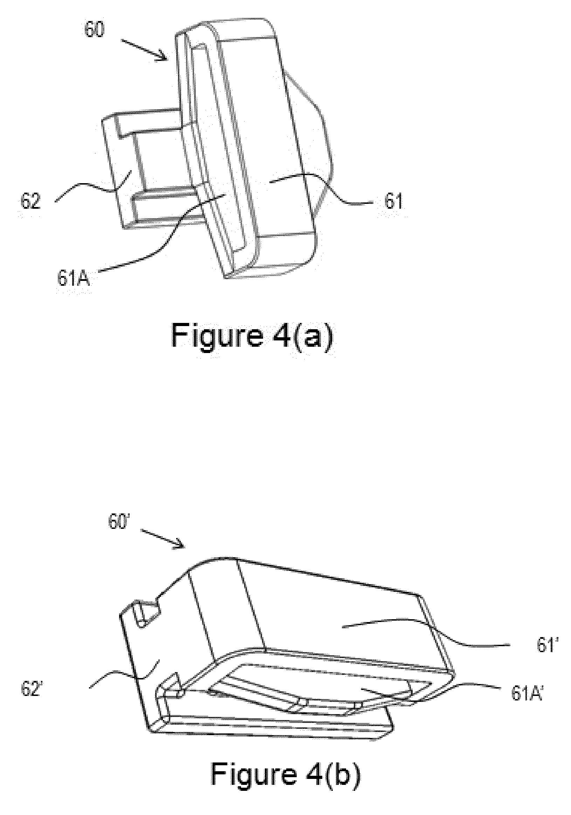

Figure 4(a) shows a perspective view of one embodiment of a positioning element 60 of the adjustable fastening element according to the present invention. The positioning element 60 comprises a portion 61 comprising a slot 61A facing in the horizontal direction. The band may be inserted in the slot 61A. The positioning element 60 is used in pairs in combination with a band. Two of the positioning elements 60 are inserted in the same horizontally extending groove 42A, 42B or 42C and the band is connected to the two positioning elements 60s in the same groove. The distance between the two positioning elements is adjustable. The positioning element 60 comprises a portion 62 insertable into the groove 42A,42B,42C through its open end to be retained therein. In this example, the insertable portion 62 of the positioning element 60 has the same shape as the insertable portion 52 of the support element 50.

Figure 4(b) shows a perspective view of another embodiment of a positioning element 60' of the adjustable fastening element according to the present invention. The positioning element 60' is shaped in the same way as the positioning element 60, except that the positioning element 60' comprises a portion 61' comprising a slot 61A' facing in the vertical direction, instead of a slot 61A facing in the horizontal direction as in the positioning element 60. Two positioning elements 60' are suitable for use where each of the two positioning elements 60' is inserted in different grooves. The band connected to the positioning elements 60' runs vertically to hold the appliance.

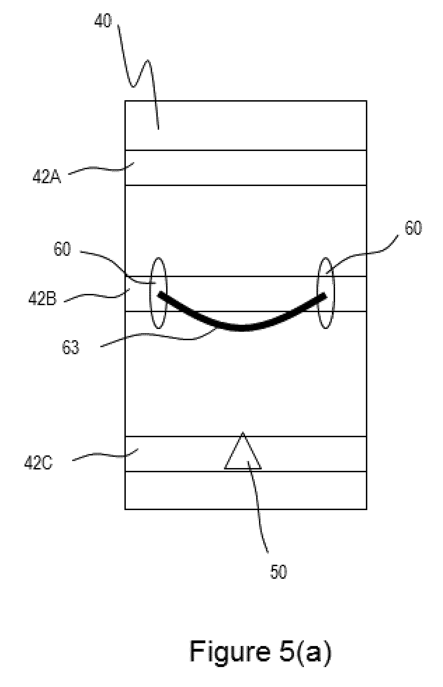

Figure 5(a) shows a typical exemplary situation using the mount board 40 of figure 1. In this example, one support element 50 of figure 3 and two positioning elements 60 of figure 4(a) are mounted on the mount board 40. The support element 50 is inserted in the lowest groove 42C and two positioning elements 60 are inserted in the groove 42B. An appliance (not shown) rests on the support element 50 and is positioned between the two positioning elements 60. A band 63 is connected to the two positioning elements 60 in the groove 42B and holds the appliance in place.

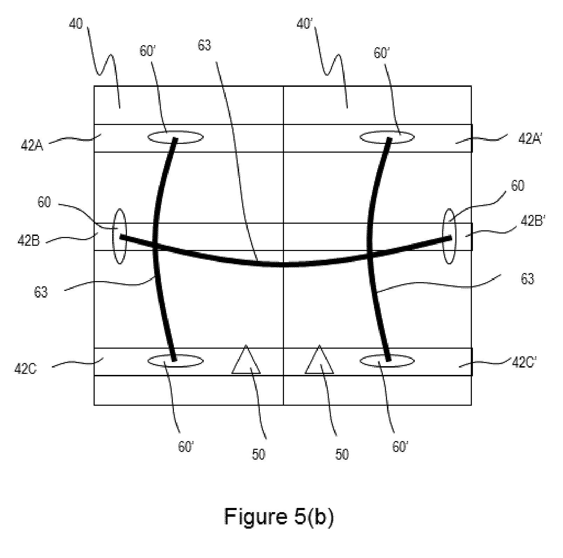

Figure 5(b) shows another typical exemplary situation for a larger appliance. In this example, the two connected mount boards 40,40' of figure 2, two support elements 50 of figure 3, two positioning elements 60 of figure 4(a) and four positioning element 60' of figure 4(b) are used. In this situation, one support element 50 is inserted in the groove 42C of the mount board 40 and one support element 50 is inserted in the groove 42C' of the mount board 40'. One positioning element 60' is inserted in the groove 42C and one positioning element 60' is inserted in the groove 42A. A band 63 runs between these two positioning elements 60' in the vertical direction over the mount board 40. Similarly, the combination of one positioning element 60' in the groove 42A', one positioning element 60' in the groove 42C' and a band 63 is made. Further, one positioning element 60 is inserted in the groove 42B and one positioning element 60 is inserted in the groove 42B' and the band 63 runs horizontally over the mount boards 40 and 40' to hold the appliance.

## Claims

1. A system for mounting an appliance behind a flat panel display having VESA-FDMI, Video Electronics Standards Association - Flat panel display Mounting Interface, holes, comprising:
- a mount board (40) provided with a first connection element (41A-41 E) with which the mount board is connectable to the display via the VESA-FDMI holes;
- a support element (50) connectable to the mount board and comprising a support portion (51) having open ends for supporting the appliance thereon; and
**characterized in that** the system further comprises
- an adjustable fastening element connectable to the mount board for fastening the appliance against the mount board,
- wherein the mount board has one side provided with a display facing groove (44) facing the display during use and an appliance facing groove (43) facing the opposite way and the display facing groove and the appliance facing groove have corresponding shapes which allow to connect the mount board (40) to a further mount board (40') by sliding the display facing groove (44) or the appliance facing groove (43) of the mount board (40) into the corresponding appliance facing groove (43) or the display facing groove (44) of the further mount board (40').

2. The system according to claim 1, wherein the display facing groove and/or the appliance facing groove are provided with a locking means for fixing to each other.

3. The system according to any one of claims 1-2, wherein the mount board is provided with a horizontally extending groove (42C) having at least one open end and the support element is insertable into the horizontally extending groove through the open end to be retained therein.

4. The system according to any one of claims 1-2, wherein the adjustable fastening element comprises at least two positioning elements (60) connectable to the mount board and a band (63) connectable to the at least two positioning elements.

5. The system according to claim 4, wherein the mount board is provided with a first horizontally extending groove (42A) having at least one open end and the positioning elements are insertable into the first horizontally extending groove through the open end to be retained therein.

6. The system according to claim 5, wherein the mount board is further provided with a second horizontally extending groove (42B) having at least one open end and the positioning elements and/or the support element are insertable into the second horizontally extending groove through the open end to be retained therein, wherein the second horizontally extending groove is positioned at a lower vertical position than the first horizontally extending groove.

7. The system according to claim 6, wherein the mount board is further provided with a third horizontally extending groove (42C) having at least one open end and the positioning elements and/or the support element are insertable into the third horizontally extending groove through the open end to be retained therein, wherein the third horizontally extending groove is positioned at a lower vertical position than the second horizontally extending groove.

8. The system according to any one of claims 5-7, wherein the positioning elements comprise slots (61 A) which face each other when inserted in the same groove (42A, 42B, 42C).

9. The system according to any one of claims 1-8, wherein the first connection element of the mount board comprises at least one slot (41 A-41 E) having a horizontally elongated shape with its length larger than the distance between two horizontally neighboring VESA-FDMI holes.

10. The system according to any one of claims 1-9, wherein the system comprises at least two mount boards (40,40').

11. The system according to claim 1-10, further comprising an infrared receiver.

12. The mount board as defined in the system according to any one of claims 1-11.

## Patentansprüche

1. System zum Montieren einer Vorrichtung hinter einem Flachbildschirm mit VESA-FDMI-Löchern (Video Electronics Standards Association - Flat Panel display Mounting Interface), das Folgendes umfasst:
- eine Montageplatte (40), die mit einem ersten Verbindungselement (41A-41E) versehen ist, mittels dessen die Montageplatte mit der Anzeige über die VESA-FDMI-Löcher verbunden werden kann;
- ein Stützelement (50), das mit der Montageplatte verbunden werden kann und einen Stützabschnitt (51) mit offenen Enden zum Stützen der Vorrichtung darauf umfasst; und
**dadurch gekennzeichnet, dass** das System ferner Folgendes umfasst
- ein einstellbares Befestigungselement, das zum Befestigen der Vorrichtung an der Montageplatte mit der Montageplatte verbunden werden kann,
- wobei die Montageplatte auf einer Seite mit einer der Anzeige zugewandten Nut (44), die in Gebrauch der Anzeige zugewandt ist, und einer der Vorrichtung zugewandten Nut (43), die in die entgegengesetzte Richtung gewandt ist, versehen ist, und wobei die der Anzeige zugewandte Nut und die der Vorrichtung zugewandte Nut einander entsprechende Gestalten aufweisen, die es ermöglichen, die Montageplatte (40) mit einer weiteren Montageplatte (40') zu verbinden, indem die der Anzeige zugewandte Nut (44) oder die der Vorrichtung zugewandte Nut (43) der Montageplatte (40) in die entsprechende der Vorrichtung zugewandte Nut (43) oder der Anzeige zugewandte Nut (44) der weiteren Montageplatte (40') eingeschoben wird.

2. System nach Anspruch 1, wobei die der Anzeige zugewandte Nut und/oder die der Vorrichtung zugewandte Nut mit einem Verriegelungsmittel zum Befestigen aneinander versehen sind.

3. System nach einem der Ansprüche 1 - 2, wobei die Montageplatte mit einer sich horizontal erstreckenden Nut (42C) mit mindestens einem offenen Ende versehen ist, und wobei das Stützelement in die sich horizontal erstreckende Nut durch das offene Ende eingeführt werden kann, um darin festgehalten zu werden.

4. System nach einem der Ansprüche 1 - 2, wobei das einstellbare Befestigungselement mindestens zwei Positionierungselemente (60), die mit der Montageplatte verbunden werden können, und einen Streifen (63), der mit den mindestens zwei Positionierungselementen verbunden werden kann, umfasst.

5. System nach Anspruch 4, wobei die Montageplatte mit einer ersten sich horizontal erstreckenden Nut (42A) mit mindestens einem offenen Ende versehen ist und die Positionierungselemente durch das offene Ende in die erste sich horizontal erstreckende Nut eingeführt werden können, um darin festgehalten zu werden.

6. System nach Anspruch 5, wobei die Montageplatte ferner mit einer zweiten sich horizontal erstreckenden Nut (42B) mit mindestens einem offenen Ende versehen ist, und die Positionierungselemente und/oder das Stützelement durch das offene Ende in die zweite sich horizontal erstreckende Nut eingeführt werden können, um darin festgehalten zu werden, wobei die zweite sich horizontal erstreckende Nut an einer niedrigeren vertikalen Position angebracht ist als die erste sich horizontal erstreckende Nut.

7. System nach Anspruch 6, wobei die Montageplatte ferner mit einer dritten sich horizontal erstreckenden Nut (42C) mit mindestens einem offenen Ende versehen ist, und die Positionierungselemente und/oder das Stützelement durch das offene Ende in die dritte sich horizontal erstreckende Nut eingeführt werden können, um darin festgehalten zu werden, wobei die dritte sich horizontal erstreckende Nut an einer niedrigeren vertikalen Position angebracht ist als die zweite sich horizontal erstreckende Nut.

8. System nach einem der Ansprüche 5 - 7, wobei die Positionierungselemente Schlitze (61A) umfassen, die einander zugewandt sind, wenn sie in die gleiche Nut (42A, 42B, 42C) eingeführt sind.

9. System nach einem der Ansprüche 1 - 8, wobei das erste Verbindungselement der Montageplatte mindestens einen Schlitz (41A-41E) umfasst, der eine horizontal langgestreckte Gestalt aufweist, wobei dessen Länge größer ist als der Abstand zwischen zwei horizontal benachbarten VESA-FDMI-Löchern.

10. System nach einem der Ansprüche 1 - 9, wobei das System mindestens zwei Montageplatten (40, 40') umfasst.

11. System nach Anspruch 1 - 10, das ferner einen Infrarotempfänger umfasst.

12. Montageplatte, wie im System nach einem der Ansprüche 1 - 11 definiert.

## Revendications

1. Système de montage d'un appareil derrière un écran plat ayant des trous d'interface de montage d'écran plat - Video Electronics Standards Association, VESA-FDMI, comprenant :
- une monture (40) pourvue d'un premier élément de raccordement (41A-41 E) avec lequel la monture peut être raccordée à l'écran via des trous VESA-FDMI ;
- un élément de soutien (50) pouvant être raccordé à la monture et comprenant une portion de soutien (51) ayant des extrémités ouvertes pour soutenir l'appareil sur celle-ci ; et
**caractérisé en ce que** le système comprend en outre :
- un élément de fixation ajustable pouvant être raccordé à la monture pour fixer l'appareil contre la monture,
- dans lequel la monture possède un côté pourvu d'une rainure faisant face à l'écran (44) faisant face à l'écran pendant l'utilisation et une rainure faisant face à l'appareil (43) faisant face au côté opposé et la rainure faisant face à l'écran et la rainure faisant face à l'appareil ont des formes correspondantes qui permettent de raccorder la monture (40) à une autre monture (40') en coulissant la rainure faisant face à l'écran (44) ou la rainure faisant face à l'appareil (43) de la monture (40) dans la rainure faisant face à l'appareil correspondante (43) ou la rainure faisant face à l'écran (44) de l'autre monture (40').

2. Système selon la revendication 1, dans lequel la rainure faisant face à l'écran et/ou la rainure faisant face à l'appareil sont pourvues d'un moyen de verrouillage pour se fixer l'une à l'autre.

3. Système selon une quelconque des revendications 1-2, dans lequel la monture est pourvue d'une rainure s'étendant horizontalement (42C) ayant au moins une extrémité ouverte et l'élément de soutien peut être inséré dans la rainure s'étendant horizontalement à travers l'extrémité ouverte afin d'être retenu dans celle-ci.

4. Système selon une quelconque des revendications 1-2, dans lequel l'élément de fixation ajustable comprend au moins deux éléments de positionnement (60) pouvant être raccordés à la monture et une bande (63) pouvant être raccordée à au moins deux éléments de positionnement.

5. Système selon la revendication 4, dans lequel la monture est pourvue d'une première rainure (42A) s'étendant horizontalement ayant au moins une extrémité ouverte et les éléments de positionnement peuvent être insérés dans la première rainure s'étendant horizontalement à travers l'extrémité ouverte afin d'être retenue dans celle-ci.

6. Système selon la revendication 5, dans lequel la monture ets en outre pourvue d'une seconde rainure s'étendant horizontalement (42B) ayant au moins une extrémité ouverte et les éléments de positionnement et/ou les éléments de soutien peuvent être insérés dans la seconde rainure s'étendant horizontalement à travers l'extrémité ouverte afin d'être retenue dans celle-ci, dans lequel la seconde rainure s'étendant horizontalement est positionnée à une position verticale plus basse que la première rainure s'étendant horizontalement.

7. Système selon la revendication 6, dans lequel la monture est en outre pourvue d'une première rainure s'étendant horizontalement (42C) ayant au moins une extrémité ouverte et les éléments de positionnement et/ou les éléments de support peuvent être insérés dans la troisième rainure s'étendant horizontalement à travers l'extrémité ouverte et afin d'être retenue dans celle-ci, dans lequel la troisième rainure s'étendant horizontalement est positionnée à une position verticale plus basse que la seconde rainure s'étendant horizontalement.

8. Système selon une quelconque des revendications 5-7, dans lequel les éléments de positionnement comprennent des fentes (61A) qui se font face l'une l'autre quand elles sont insérées dans la même rainure (42A,42B,42C).

9. Système selon une quelconque des revendications 1-8, dans lequel le premier élément de raccordement de la monture comprend au moins une fente (41A-41 E) ayant une forme allongée horizontalement avec sa longueur plus grande que la distance entre deux trous VESA-FDMI voisins horizontalement.

10. Système selon une quelconque des revendications 1-9, dans lequel le système comprend au moins deux montures (40,40').

11. Système selon la revendication 1-10, comprenant en outre un récepteur infrarouge.

12. Monture telle que définie dans le système selon une quelconque des revendications 1-11.
